# FASCICULE DE BREVET EUROPEEN

(11) **EP 2 920 044 B1**
(45) Date de publication et mention de la délivrance du brevet: **20.03.2019**
(21) Numéro de dépôt: 13786469.0
(22) Date de dépôt: 05.11.2013
(51) Int. Cl.: B62D 25/08, B62D 25/14, B60R 21/34

(54) **ELÉMENT DE RENFORT POUR TRAVERSE INFÉRIEURE DE BAIE OPTIMISANT LA RÉCEPTION D'UN CHOC PROVOQUÉ PAR LA TÊTE D'UN PIÉTON**
VERSTÄRKUNGSELEMENT FÜR DEN UNTEREN QUERTRÄGER EINER FENSTERÖFFNUNG ZUR ABSORPTION EINES DURCH DEN KOPF EINES FUSSGÄNGERS VERURSACHTEN AUFPRALLS
REINFORCING ELEMENT FOR A WINDOW OPENING LOWER CROSS MEMBER THAT OPTIMIZES THE ABSORPTION OF AN IMPACT CAUSED BY THE HEAD OF A PEDESTRIAN

(30) Priorité: 13.11.2012 FR 1260769
(43) Date de publication de la demande: 23.09.2015
(73) Titulaire: Renault S.A.S., 92100 Boulogne-Billancourt (FR)
(72) Inventeur: CAMUS, Guillaume, 78280 Guyancourt (FR); BISROR, Olivier, 92350 Le Plessis Robinson (FR); L'HERMINE, Olivier, 75116 Paris (FR)
(86) Numéro de dépôt international: PCT/EP2013/072974
(87) Numéro de publication internationale: WO 2014/075942

(56) Documents cités:
- EP-A1- 1 810 892
- DE-A1-102010 005 834
- US-A1- 2008 211 255
- US-A1- 2011 068 607

## Description

### Domaine technique de l'invention

L'invention concerne un agencement pour un véhicule automobile, comprenant un pare-brise et une traverse inférieure de baie soutenant le pare-brise. L'invention concerne le côté sécuritaire du véhicule.

L'invention a pour objet également un véhicule automobile en tant que tel comprenant un tel agencement.

### État de la technique

Dans le domaine de la sécurisation d'un véhicule automobile et, notamment, pour répondre aux contraintes provoquées par le choc d'un piéton, les critères d'homologation prévoient notamment des niveaux de décélération cohérents avec les capacités de résistance du corps humain. Pour ce faire, la partie inférieure du pare-brise doit être capable de s'enfoncer en direction de la partie supérieure de la traverse inférieure de baie qui le soutient afin d'absorber autant que possible l'énergie libérée par un choc de la tête de piéton sur la partie inférieure du pare-brise.

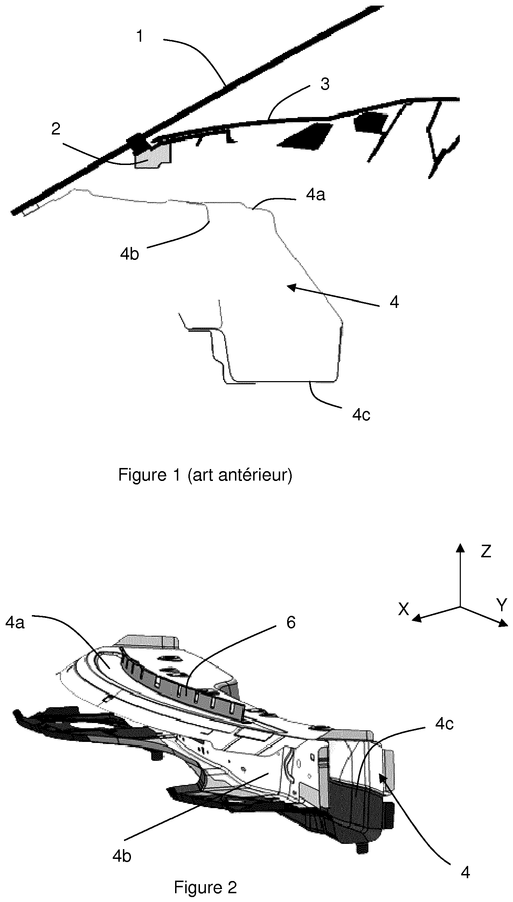

La figure 1 représente un pare-brise 1 fixé à un bloc de mousse 2 tenant également l'extrémité avant d'une planche de bord 3. Une traverse inférieure de baie 4 est aménagée dans le sens transversal du véhicule afin de supporter la partie inférieure du pare-brise 1. Ainsi, le bloc de mousse 2 est lui-même supporté par la planche de bord 3 dans sa partie avant, en laissant subsister un espace libre par rapport à une traverse inférieure de baie 4 située en dessous et à distance. Elle se présente sous la forme d'un corps creux constitué notamment d'une pièce supérieure de traverse inférieure de baie 4a, d'une pièce inférieure de traverse inférieure de baie 4b et d'une cloison de chauffage 4c. Le bloc de mousse permet alors d'absorber l'énergie libérée lors d'un choc de la tête d'un piéton sur la partie inférieure du pare-brise 1 et éventuellement sur la partie avant de la planche de bord 3.
Toutefois cette solution ne donne pas entière satisfaction car le comportement du bloc de mousse 2 sous l'application du choc est difficile à anticiper, sa mise en oeuvre est complexe et les résultats en termes de sécurité restent perfectibles. En particulier, la raideur de la mousse n'est pas satisfaisante au moment de l'entrée en contact avec la tête du piéton.
On connait également les documents EP1810892 A1 et US2008/211255A1 décrivant des agencements pour véhicule automobile, comprenant un pare-brise et une traverse inférieure de baie soutenant le pare-brise, un élément de renfort étant interposé entre la traverse inférieure de baie et le pare-brise. Le document EP1810892 A1 en particulier présente un agencement pour véhicule automobile tel que déCrit par le préambule de la revendication 1.

### Objet de l'invention

Le but de la présente invention est de proposer un agencement pour véhicule automobile modifié par rapport à cet art antérieur pour remédier aux inconvénients listés ci-dessus, notamment pour simplifier la solution et sa mise en oeuvre et pour améliorer la sécurité conférée par le véhicule équipé de l'agencement, afin in fine de limiter les dommages subis par une tête de piéton lors d'un choc contre le pare-brise.
On parvient à ce but en fournissant un agencement pour un véhicule automobile tel que décrit par la revendication 1. La matière de l'élément de renfort peut présenter une raideur permettant l'écrasement de l'élément de renfort en direction de la traverse inférieure de baie sous l'effet du choc de la tête de piéton sur le pare-brise.
L'élément de renfort peut avantageusement être formé dans une matière métallique.
La forme de l'élément de renfort peut être configurée de sorte à favoriser l'écrasement de l'élément de renfort en direction de la traverse inférieure de baie sous l'effet du choc de la tête de piéton sur le pare-brise.

Conformément à l'invention, l'élément de renfort est un profilé incurvé sur sa longueur, s'étendant globalement selon la direction de la traverse inférieure de baie qui est notamment orientée selon une direction transversale du véhicule, et ledit profilé présente une section de coupe ayant une partie supérieure sur laquelle est fixée une partie avant de la planche de bord, une partie inférieure fixée à la traverse inférieure de baie, une partie de liaison entre les parties supérieure et inférieure de la section de coupe, l'ensemble étant configuré de sorte que les zones de raccordement entre la partie de liaison et les parties supérieure et inférieure, et la partie de liaison elle-même, sont des zones préférentielles de plus grande déformabilité sous l'effet du choc de la tête de piéton sur le pare-brise, et les parties supérieure et inférieure et la partie de liaison de la section de coupe sont agencées de sorte que la section de coupe du profilé ait sensiblement une forme générale de Z.
Le profilé peut de préférence comprendre une pluralité d'échancrures réparties sur la longueur du profilé, chacune débouchant sur la partie supérieure de la section de coupe et s'étendant sur tout ou partie de la hauteur de la partie de liaison de la section de coupe, délimitant deux à deux des créneaux échelonnés sur la longueur du profilé, chaque créneau étant susceptible de se déformer plastiquement, notamment par écrasement en direction de la partie inférieure de la section de coupe, indépendamment des autres créneaux.

L'élément de renfort peut être d'un seul tenant sur sensiblement toute la longueur de la face supérieure de la traverse inférieure de baie ou alternativement être composé d'une pluralité de tronçons indépendants les uns des autres et agencés en alignement les uns à la suite des autres le long de la traverse inférieure de baie.
L'élément de renfort peut venir de matière avec une pièce supérieure de la traverse inférieure de baie ou alternativement être est fixé, notamment par soudage, à ladite pièce supérieure de la traverse inférieure de baie. Ladite pièce supérieure de la traverse inférieure de baie peut être assemblée avec une pièce inférieure de traverse inférieure de baie et avec une cloison de chauffage ou un tablier de séparation entre un compartiment moteur et un habitacle, de sorte à former une traverse inférieure de baie en forme de corps creux à contour fermé ou ouvert délimitant un volume transversal.

Avantageusement, un véhicule automobile peut comprendre un tel agencement.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1, déjà décrite, est une vue en coupe longitudinale d'un agencement pour véhicule automobile selon l'art antérieur,
- les figures 2 à 4 sont des vues en perspective, en coupe longitudinale et en vue de dessus, d'un exemple d'agencement pour véhicule automobile selon l'invention,
- et les figures 5 et 6 sont deux vues en perspective de l'élément de renfort qui équipe l'agencement selon les figures 2 à 4.

### Description de modes préférentiels de l'invention

La suite de la description, en référence aux figures 2 à 6 maintenant, concerne généralement un agencement pour un véhicule automobile, comprenant un pare-brise 1 et une traverse inférieure de baie 4 soutenant le pare-brise dans sa partie inférieure (vu dans une direction verticale Z), au niveau de l'avant du pare-brise 1 (vu dans une direction longitudinale X correspondant à la direction de déplacement du véhicule). La direction transversale, perpendiculaire aux directions X et Z, est repérée Y. Elle correspond à la direction générale d'extension de la traverse inférieure de baie 4, entre les pieds avant droit et gauche de la structure du véhicule. De manière générale, les mêmes références sont conservées sur les figures 2 à 6 par rapport à la figure 1 pour des éléments identiques, pour des raisons de clarté et de simplicité.

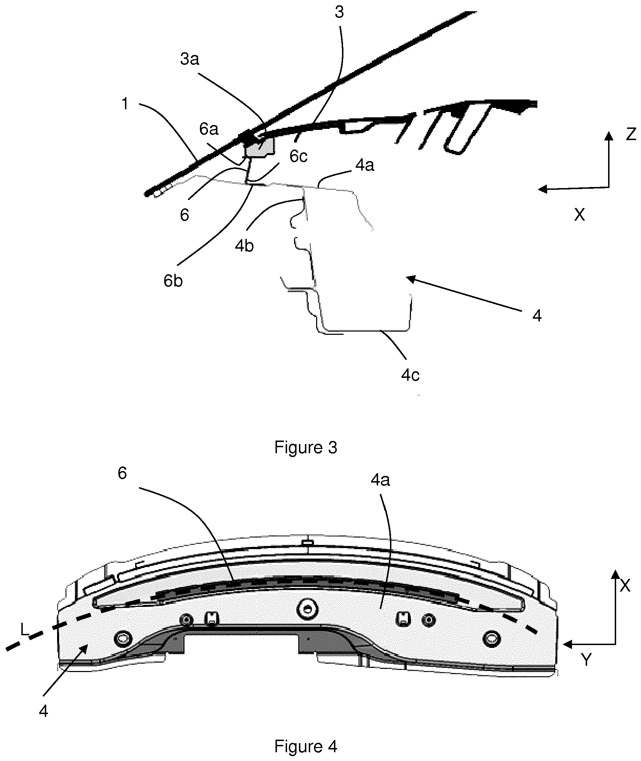

Les figures 2 et 3 représentent le pare-brise 1 fixé dans sa partie avant à une partie avant 3a d'une planche de bord 3. Une traverse inférieure de baie 4 est aménagée dans la direction transversale Y afin de supporter la partie inférieure du pare-brise 1 et la partie avant 3a de la planche de bord 3. La traverse inférieure de baie 4 est constituée par l'assemblage d'une pièce supérieure de traverse inférieure de baie 4a avec une pièce inférieure de traverse inférieure de baie 4b et avec une cloison de chauffage 4c ou un tablier de séparation entre un compartiment moteur et un habitacle. Un tel assemblage a pour vocation de former une traverse inférieure de baie 4 adoptant une forme de corps creux à contour fermé ou ouvert, délimitant un volume transversal, ce qui présente l'avantage d'une grande rigidité malgré un faible poids. Toutefois, la traverse inférieure de baie 4 peut être de toute autre nature connue, sa structure n'étant pas limitative dans le cadre d'application de l'invention.

L'agencement comprend un élément de renfort 6 qui s'étend sur au moins une partie, préférentiellement sur sensiblement la totalité, de la longueur de la traverse inférieure de baie 4 considérée dans la direction transversale Y. L'élément de renfort 6 est interposé entre la traverse inférieure de baie 4 et le pare-brise 1. Plus précisément, l'élément de renfort 6 est interposé entre la partie avant 3a de la planche de bord 3 et la pièce supérieure de traverse inférieure de baie 4a.

L'élément de renfort 6 est formé, de préférence, dans une matière métallique. Il peut également être formé dans une matière plastique, ou « padding ». Sa forme et sa matière sont ajustées de sorte à prédéterminer et à optimiser la déformation de l'élément de renfort 6 en cas de choc au niveau du pare-brise 1 par une tête de piéton afin d'optimiser l'enfoncement du pare-brise 1 en direction de la traverse inférieure de baie 4 et l'absorption d'énergie générée par ce choc. Etant interposé entre la traverse inférieure de baie 4 et la partie avant 3a de la planche de bord 3, il en résulte que l'élément de renfort 6 permet aussi d'optimiser l'enfoncement de la planche de bord 3 et l'absorption d'énergie lorsque la tête de piéton vient aussi percuter, durant le choc, la partie avant 3a de la planche de bord 3.

Avantageusement, la matière dans laquelle l'élément de renfort 6 est formé présente une raideur permettant l'écrasement de l'élément de renfort 6 en direction de la traverse inférieure de baie 4 sous l'effet du choc de la tête de piéton sur le pare-brise 1 et éventuellement sur la planche de bord. Des essais et des simulations numériques ont montré que le choix d'une matière métallique sous la forme d'un acier laminé à froid par emboutissage profond connu sous la norme de référence XES donnait d'excellents résultats, conformes au cahier des charge en terme de sécurité du piéton.

De manière générale, la forme générale en trois dimensions de l'élément de renfort 6 est conçue et configurée de sorte à favoriser l'écrasement de l'élément de renfort 6 en direction de la traverse inférieure de baie 4 sous l'effet du choc de la tête de piéton sur le pare-brise 1 et éventuellement sur la planche de bord 3.

Préférentiellement, l'élément de renfort 6 est constitué par un profilé incurvé sur sa longueur et s'étendant globalement selon la direction de la traverse inférieure de baie 4, qui est notamment orientée selon la direction transversale Y. L'épaisseur du profilé est avantageusement de l'ordre de 1 mm, mais peut varier suivant les applications, les dimensions et le choix de la matière, dans une plage comprise entre environ 0,6 mm environ et 2 mm environ.

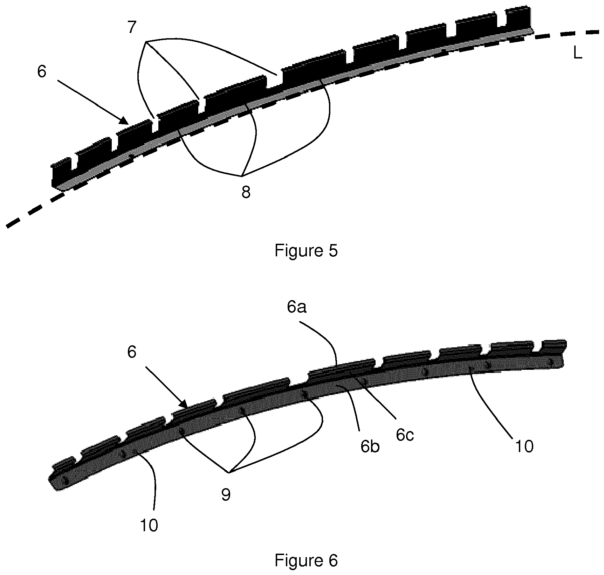

Le profilé en matière métallique qui constitue l'élément de renfort 6 est représenté en détails sur les figures 5 et 6. Comme on le voit sur ces figures et sur la figure 3 également, ce profilé présente une section de coupe ayant :
- une partie supérieure 6a sur laquelle est fixée une partie avant 3a de la planche de bord3, ceci permettant de favoriser le contact et donc la transmission d'effort entre le pare-brise 1, la partie avant 3a de la planche de bord 3 et l'élément de renfort,
- une partie inférieure 6b fixée à la traverse inférieure de baie 4,
- et une partie de liaison 6c entre les parties supérieure et inférieure 6a, 6b de la section de coupe du profilé.

Dans cette définition, la section de coupe du profilé en un point donné de la longueur du profilé est la section de coupe du profilé vu en coupe selon un plan localement perpendiculaire à sa ligne L d'extension ou d'extrusion (figure 5). Par exemple, au milieu de la longueur du profilé, ce plan de coupe est un plan orienté selon les directions longitudinale X et verticale Y. Mais le profilé étant incurvé sur sa longueur afin de suivre la courbure du pare-brise 1 dans sa partie inférieure de liaison au capot de fermeture du compartiment moteur, le plan de coupe définissant la section du profilé change d'orientation le long de la longueur du profilé, le long de la ligne L d'extension ou d'extrusion.

L'ensemble constitué par la partie supérieure 6a, la partie de liaison 6c et la partie inférieure 6b de la section de coupe est configuré de sorte que la zone de raccordement entre la partie de liaison 6c et la partie inférieure 6b, la zone de raccordement entre la partie de liaison 6c et la partie supérieure 6a, ainsi que la partie de liaison 6c elle-même, soient des zones préférentielles de plus grande déformabilité sous l'effet du choc de la tête de piéton sur le pare-brise 1.

Préférentiellement, la partie supérieure 6a et la partie inférieure 6b de la section de coupe sont toutes deux sensiblement perpendiculaires à la partie de liaison 6c de la section de coupe. On entend par « sensiblement perpendiculaire » la possibilité que ce soit « exactement perpendiculaire » ou « perpendiculaire à plus ou moins 20 degrés ». Alternativement, les parties supérieure, inférieure et de liaison 6a, 6b et 6c sont agencées de sorte que la section de coupe est sensiblement une forme générale de Z, notamment si l'angle formé par au moins l'une des parties supérieure 6a et inférieure 6b avec la partie de liaison 6c est supérieur à 20 degrés.

Préférentiellement, dans le but de l'optimisation de la déformation de l'élément de renfort 6, le profilé comprend une pluralité d'échancrures 7, par exemple au nombre de neuf, réparties sur la longueur du profilé (i.e. le long de la ligne L d'extension ou d'extrusion du profilé). Chacune des neuf échancrures 7 débouche sur la partie supérieure 6a de la section de coupe du profilé et s'étend sur tout ou partie de la hauteur de la partie de liaison 6c de la section de coupe. Les échancrures 7 délimitent deux à deux des créneaux 8 échelonnés sur la longueur du profilé (i.e. le long de la ligne L d'extension ou d'extrusion du profilé). Chaque créneau 8 dirigé vers le haut selon la direction Z en partant globalement de la partie inférieure 6b de la section de coupe du profilé, est susceptible de se déformer plastiquement, notamment par écrasement en direction de la partie inférieure 6b de la section de coupe, indépendamment des autres créneaux 8, durant l'absorption du choc de la tête de piéton. La présence des échancrures 7 et des créneaux 8 facilite l'écrasement par déformation plastique de l'élément de renfort 6 en direction de la traverse inférieure de baie 4 par rapport à une solution dépourvues de telles échancrures.

Dans une variante non limitative, l'échancrure 7 centrale, située sensiblement au centre de la longueur du profilé, présente une largeur comptée selon la ligne L d'extension du profilé qui est supérieure à la largeur des autres échancrures. Cette disposition permet de faciliter le pilotage de l'élément de renfort 6 durant l'assemblage avec la traverse inférieure de baie 4.

Bien que dans la variante illustrée, l'élément de renfort 6 est d'un seul tenant sur sensiblement toute la longueur de la face supérieure de la traverse inférieure de baie 4, il peut tout à fait être alternativement composé d'une pluralité de tronçons indépendants les uns des autres et agencés en alignement les uns à la suite des autres le long de la traverse inférieure de baie 4 sans sortir du cadre de l'invention.

Dans la variante illustrée, l'élément de renfort 6 d'un seul tenant est fixé, notamment par soudage, à la pièce supérieure de traverse inférieure de baie 4a. Les points de soudage 9, par exemple au nombre de neuf, sont échelonnés à intervalle régulier ou non le long de la ligne L d'extension ou d'extrusion du profilé, comme le montre la figure 6. Toutefois, il reste tout à fait envisageable que l'élément de renfort 6 vienne de matière avec une pièce constitutive de la traverse inférieure de baie 4, notamment avec la pièce supérieure de la traverse inférieure de baie 4a.

En outre, durant l'assemblage avec la traverse inférieure de baie 4, il peut être prévu de réaliser un pré-assemblage de l'élément de support 6 avec la traverse inférieure de baie, par exemple au moyen de rivets 10, préalablement à la mise en oeuvre des points de soudage 9. Ceci permet de contenir la main d'oeuvre nécessaire aux opérations d'assemblage.

Par ailleurs, le mode particulier de réalisation de l'élément de renfort 6 représenté sur les figures 5 et 6 a été déterminé selon les études d'optimisation pour un cas précis de véhicule automobile. Cependant, d'autres profils d'éléments de renfort 6 peuvent remplir les mêmes exigences selon le contexte de véhicule.

L'invention porte aussi sur un véhicule automobile comprenant un tel agencement, dans toutes les variantes envisagées précédemment.

## Revendications

1. Agencement pour un véhicule automobile, comprenant un pare-brise (1) et une traverse inférieure de baie (4) soutenant le pare-brise (1), un élément de renfort (6) s'étendant sur au moins une partie, notamment sur sensiblement la totalité, de la longueur de la traverse inférieure de baie (4) et interposé entre la traverse inférieure de baie (4) et le pare-brise (1), l'élément de renfort (6) étant formé de matière et de forme ajustées de sorte à prédéterminer et à optimiser la déformation de l'élément de renfort (6) en cas de choc au niveau du pare-brise (1) par une tête de piéton afin d'optimiser l'enfoncement du pare-brise (1) en direction de la traverse inférieure de baie (4) et l'absorption d'énergie générée par ce choc, l'élément de renfort (6) étant un profilé incurvé sur sa longueur, s'étendant globalement selon la direction de la traverse inférieure de baie qui est notamment orientée selon une direction transversale (Y) du véhicule, et ledit profilé présente une section de coupe ayant une partie supérieure (6a) sur laquelle est fixée une partie avant (3a) de la planche de bord (3), une partie inférieure (6b) fixée à la traverse inférieure de baie (4), une partie de liaison (6c) entre les parties supérieure et inférieure (6a, 6b) de la section de coupe, l'ensemble étant configuré de sorte que les zones de raccordement entre la partie de liaison (6c) et les parties supérieure et inférieure (6a, 6b), et la partie de liaison (6c) elle-même, sont des zones préférentielles de plus grande déformabilité sous l'effet du choc de la tête de piéton sur le pare-brise (1), **caractérisé en ce que** les parties supérieure et inférieure (6a, 6b) et la partie de liaison (6c) de la section de coupe sont agencées de sorte que la section de coupe du profilé a sensiblement une forme générale de Z.

2. Agencement selon la revendication 1, **caractérisé en ce que** la matière de l'élément de renfort (6) présente une raideur permettant l'écrasement de l'élément de renfort (6) en direction de la traverse inférieure de baie (4) sous l'effet du choc de la tête de piéton sur le pare-brise (1).

3. Agencement selon la revendication 2, **caractérisé en ce que** l'élément de renfort (6) est formé dans une matière métallique.

4. Agencement selon l'une des revendications 1 à 3, **caractérisé en ce que** la forme de l'élément de renfort (6) est configurée de sorte à favoriser l'écrasement de l'élément de renfort (6) en direction de la traverse inférieure de baie (4) sous l'effet du choc de la tête de piéton sur le pare-brise (1).

5. Agencement selon l'une quelconque des revendications précédentes, **caractérisé en ce que** le profilé comprend une pluralité d'échancrures (7) réparties sur la longueur du profilé, chacune débouchant sur la partie supérieure (6a) de la section de coupe et s'étendant sur tout ou partie de la hauteur de la partie de liaison (6c) de la section de coupe, délimitant deux à deux des créneaux (8) échelonnés sur la longueur du profilé, chaque créneau (8) étant susceptible de se déformer plastiquement, notamment par écrasement en direction de la partie inférieure (6b) de la section de coupe, indépendamment des autres créneaux (8).

6. Agencement selon l'une quelconque des revendications précédentes, **caractérisé en ce que** l'élément de renfort (6) est d'un seul tenant sur sensiblement toute la longueur de la face supérieure de la traverse inférieure de baie (4) ou composé d'une pluralité de tronçons indépendants les uns des autres et agencés en alignement les uns à la suite des autres le long de la traverse inférieure de baie (4).

7. Agencement selon l'une quelconque des revendications précédentes, **caractérisé en ce que** l'élément de renfort (6) vient de matière avec une pièce supérieure de la traverse inférieure de baie (4a) ou est fixé, notamment par soudage, à ladite pièce supérieure de la traverse inférieure de baie (4a) et **en ce que** ladite pièce supérieure de la traverse inférieure de baie (4a) est assemblée avec une pièce inférieure de traverse inférieure de baie (4b) et avec une cloison de chauffage (4c) ou un tablier de séparation entre un compartiment moteur et un habitacle, de sorte à former une traverse inférieure de baie (4) en forme de corps creux à contour fermé ou ouvert délimitant un volume transversal.

8. Véhicule automobile comprenant un agencement selon l'une quelconque des revendications précédentes.

## Patentansprüche

1. Anordnung für ein Kraftfahrzeug, umfassend eine Windschutzscheibe (1) und einen unteren Querträger einer Fensteröffnung (4), der die Windschutzscheibe (1) unterstützt, wobei sich ein Verstärkungselement (6) auf mindestens einem Teil, insbesondere auf im Wesentlichen der Gesamtheit der Länge des unteren Querträgers einer Fensteröffnung (4) erstreckt und zwischen dem unteren Querträger einer Fensteröffnung (4) und der Windschutzscheibe (1) zwischengefügt ist, wobei das Verstärkungselement (6) von entsprechendem Material und Form ist, um die Verformung des Verstärkungselements (6) im Falle eines Aufpralls im Bereich der Windschutzscheibe (1), verursacht durch den Kopf eines Fußgängers, vorherzubestimmen und zu optimieren, um das Einsenken der Windschutzscheibe (1) in Richtung des unteren Querträgers einer Fensteröffnung (4) und die Absorption der durch diesen Aufprall erzeugten Energie zu optimieren, wobei das Verstärkungselement (6) ein auf seiner Länge gekrümmtes Profil ist, das sich global in die Richtung des unteren Querträgers einer Fensteröffnung erstreckt, der insbesondere in eine Querrichtung (Y) des Fahrzeugs ausgerichtet ist, wobei das Profil einen Querschnitt aufweist, umfassend einen oberen Teil (6a), auf dem ein Vorderteil (3a) des Armaturenbretts (3) befestigt ist, einen unteren Teil (6b), der an dem unteren Querträger einer Fensteröffnung (4) befestigt ist, einen Verbindungsteil (6c) zwischen den oberen und unteren Teilen (6a, 6b) des Querschnitts, wobei die Einheit eingerichtet ist, dass die Anschlusszonen zwischen dem Verbindungsteil (6c) und den oberen und unteren Teilen (6a, 6b) und der Verbindungsteil (6c) selbst bevorzugte Zonen mit größerer Verformbarkeit unter der Einwirkung des Aufpralls des Kopfes eines Fußgängers auf der Windschutzscheibe (1) sind, **dadurch gekennzeichnet, dass** die oberen und unteren Teile (6a, 6b) und der Verbindungsteil (6c) des Querschnitts derart vorgesehen sind, dass der Querschnitt des Profils im Wesentliche eine allgemeine Z-Form hat.

2. Anordnung nach Anspruch 1, **dadurch gekennzeichnet, dass** das Material des Verstärkungselements (6) eine Steifigkeit aufweist, die das Zusammendrücken des Verstärkungselements (6) in Richtung des unteren Querträgers einer Fensteröffnung (4) unter der Einwirkung des Aufpralls des Kopfes eines Fußgängers auf der Windschutzscheibe (1) ermöglicht.

3. Anordnung nach Anspruch 2, **dadurch gekennzeichnet, dass** das Verstärkungselement (6) aus einem metallischen Material hergestellt ist.

4. Anordnung nach einem der Ansprüche 1 bis 3, **dadurch gekennzeichnet, dass** die Form des Verstärkungselements (6) eingerichtet ist, dass das Zusammendrücken des Verstärkungselements (6) in Richtung des unteren Querträgers einer Fensteröffnung (4) unter der Einwirkung des Aufpralls des Kopfes eines Fußgängers auf der Windschutzscheibe (1) begünstigt wird.

5. Anordnung nach einem der vorhergehenden Ansprüche, **dadurch gekennzeichnet, dass** das Profil eine Vielzahl von bogenförmigen Ausschnitten (7) umfasst, die auf der Länge des Profils verteilt sind, die jeweils auf dem oberen Teil (6a) des Querschnitts münden und sich auf der Gesamtheit oder einem Teil der Höhe des Verbindungsteils (6c) des Querschnitts erstrecken, zwei und zwei abgestufte Zinnen (8) auf der Länge des Profils begrenzen, wobei jede Zinne (8) geeignet ist, sich plastisch insbesondere durch Zusammendrücken in Richtung des unteren Teils (6b) des Querschnitts unabhängig von den anderen Zinnen (8) zu verformen.

6. Anordnung nach einem der vorhergehenden Ansprüche, **dadurch gekennzeichnet, dass** das Verstärkungselement (6) auf im Wesentlichen der ganzen Länge der Oberseite des unteren Querträgers einer Fensteröffnung (4) aus einem Stück ist oder aus einer Vielzahl von voneinander unabhängigen Abschnitten, die zueinander entlang des unteren Querträgers einer Fensteröffnung (4) ausgerichtet angeordnet sind, zusammengesetzt ist.

7. Anordnung nach einem der vorhergehenden Ansprüche, **dadurch gekennzeichnet, dass** das Verstärkungselement (6) aus einem Stück mit einem Oberteil des Querträgers einer Fensteröffnung (4a) ist oder insbesondere durch Schweißen an dem Oberteil des Querträgers einer Fensteröffnung (4a) befestigt ist und dass der Oberteil des Querträgers einer Fensteröffnung (4a) mit einem Unterteil eines Querträgers einer Fensteröffnung (4b) und mit einer Heizwand (4c) oder einer Trennwand zwischen einem Motorabteil und einem Fahrgastraum verbunden ist, um einen unteren Querträger einer Fensteröffnung (4) in Form eines Hohlkörper mit geschlossener oder offene Kontur, der ein Quervolumen begrenzt, zu bilden.

8. Kraftfahrzeug, umfassend eine Anordnung nach einem der vorhergehenden Ansprüche.

## Claims

1. Arrangement for a motor vehicle, comprising a windscreen (1) and a window opening bottom cross member (4) supporting the windscreen (1), a reinforcing element (6) extending over at least part, in particular over substantially all, of the length of the window opening bottom cross member (4) and interposed between the window opening bottom cross member (4) and the windscreen (1), the reinforcing element (6) being formed of material and of a form that are fitted so as to predetermine and optimize the deformation of the reinforcing element (6) in case of impact on the windscreen (1) by a head of a pedestrian in order to optimize the caving of the windscreen (1) towards the window opening bottom cross member (4) and the absorption of energy generated by this impact, the reinforcing element (6) being a sectional bar dished over its length, extending overall in the direction of the window opening bottom cross member which is normally oriented in a transverse direction (Y) of the vehicle, and said sectional bar has a cross section having a top part (6a) to which is fixed a front part (3a) of the dashboard (3), a bottom part (6b) fixed to the window opening bottom cross member (4), a link part (6c) between the top and bottom parts (6a, 6b) of the cross section, the assembly being configured such that the connecting zones between the link part (6c) and the top and bottom parts (6a, 6b), and the link part (6c) itself, are preferential zones of greater deformability under the effect of the impact of the head of a pedestrian on the windscreen (1), **characterized in that** the top and bottom parts (6a, 6b) and the link part (6c) of the cross section are arranged such that the cross section of the sectional bar is substantially generally Z-shaped.

2. Arrangement according to Claim 1, **characterized in that** the material of the reinforcing element (6) has a stiffness allowing the reinforcing element (6) to be crushed towards the window opening bottom cross member (4) under the effect of the impact of the head of a pedestrian on the windscreen (1).

3. Arrangement according to Claim 2, **characterized in that** the reinforcing element (6) is formed in a metal material.

4. Arrangement according to one of Claims 1 to 3, **characterized in that** the form of the reinforcing element (6) is configured so as to favour the crushing of the reinforcing element (6) towards the window opening bottom cross member (4) under the effect of the impact of the head of a pedestrian on the windscreen (1).

5. Arrangement according to any one of the preceding claims, **characterized in that** the sectional bar comprises a plurality of notches (7) distributed over the length of the sectional bar, each emerging on the top part (6a) of the cross section and extending over all or part of the height of the link part (6c) of the cross section, delimiting, in pairs, crenulations (8) staged over the length of the sectional bar, each crenulation (8) being able to be plastically deformed, in particular by crushing towards the bottom part (6b) of the cross section, independently of the other crenulations (8).

6. Arrangement according to any one of the preceding claims, **characterized in that** the reinforcing element (6) is of a single piece over substantially all the length of the top face of the window opening bottom cross member (4) or composed of a plurality of mutually independent sections arranged in alignment one after the other along the window opening bottom cross member (4).

7. Arrangement according to any one of the preceding claims, **characterized in that** the reinforcing element (6) is made in one piece with a top piece of the window opening bottom cross member (4a) or is fixed, in particular by welding, to said top piece of the window opening bottom cross member (4a) and **in that** said top piece of the window opening bottom cross member (4a) is assembled with a bottom piece of the window opening bottom cross member (4b) and with a heating partition (4c) or a separating fire wall between an engine compartment and a car interior, so as to form a window opening bottom cross member (4) in the form of a hollow body with closed or open outline delimiting a transverse volume.

8. Motor vehicle comprising an arrangement according to any one of the preceding claims.
